# EUROPÄISCHE PATENTSCHRIFT

(11) **EP 3 336 319 B1**
(45) Veröffentlichungstag und Bekanntmachung des Hinweises auf die Patenterteilung: **31.07.2019**
(21) Anmeldenummer: 17206711.8
(22) Anmeldetag: 12.12.2017
(51) Int. Cl.: F01D 17/16, F16C 3/12, F16C 3/22, F02C 9/22, F16C 3/18, F16C 17/02, F16C 17/18, F16C 3/28

(54) **VERSTELLEINRICHTUNG FÜR DIE VERSTELLUNG MEHRERER LEITSCHAUFELN EINES TRIEBWERKS**
ADJUSTING DEVICE FOR ADJUSTING A PLURALITY OF GUIDE VANES OF AN ENGINE
DISPOSITIF DE RÉGLAGE DESTINÉ AU RÉGLAGE D'AUBES DIRECTRICES MULTIPLES D'UN GROUPE PROPULSEUR

(30) Priorität: 19.12.2016 DE 102016225482
(43) Veröffentlichungstag der Anmeldung: 20.06.2018
(60) Teilanmeldung: 19168230.1
(73) Patentinhaber: Rolls-Royce Deutschland Ltd & Co KG, 15827 Blankenfelde-Mahlow (DE)
(72) Erfinder: MOJEM, Mats Rudolf, 12163 Berlin (DE)
(74) Vertreter: Maikowski & Ninnemann Patentanwälte Partnerschaft mbB

(56) Entgegenhaltungen:
- EP-A1- 2 136 036
- EP-A1- 2 703 606
- EP-A1- 2 949 878
- WO-A1-2014/133724
- US-A1- 2014 133 968

## Beschreibung

Die Erfindung betrifft eine Verstelleinrichtung für die Verstellung mehrerer Leitschaufeln eines Triebwerks.

Es ist allgemein bekannt, in Triebwerken, zum Beispiel Turbomaschinen und insbesondere Gasturbinentriebwerken verstellbare Leitschaufeln für die Beeinflussung der Strömung in Abhängigkeit von der Drehzahl rotierender Laufschaufeln vorzusehen. Insbesondere bei Gasturbinentriebwerken werden üblicherweise verstellbare Leitschaufeln im Bereich des Verdichters eingesetzt, wobei die Leitschaufeln in Abhängigkeit der Verdichterdrehzahl verstellt werden. Die verstellbaren Leitschaufeln werden hierbei in der englischen Fachsprache als *variable stator vanes* kurz "VSV" bezeichnet.

Die verstellbaren Leitschaufeln sind hier üblicherweise Bestandteil einer Leitschaufelreihe und innerhalb eines Gehäuses angeordnet, in dem auch die rotierenden Laufschaufeln angeordnet sind. Die einzelnen Leitschaufeln sind dabei in der Praxis jeweils über einen Lagerzapfen verstellbar an dem Gehäuse gelagert. Innerhalb des Gehäuses ist üblicherweise eine drehbare Lagerung einer Leitschaufel an einer Nabe, z.B. eines Verdichters, vorgesehen. An dem Gehäuse ist jeder Lagerzapfen drehbar in einer zugehörigen Lageröffnung in der Wandung des Gehäuses gelagert. Dabei durchgreift der Lagerzapfen diese Lageröffnung entlang einer Erstreckungsrichtung des Lagerzapfens, sodass ein Ende des Lagerzapfens an einer Außenseite des Gehäuses zugänglich ist, um durch Drehung des Lagerzapfens die entsprechende Leitschaufel verstellen zu können. Hierbei greift üblicherweise jeweils ein Hebel an einem Zapfenende an, der an einem Verstellelement in Form eine Verstellrings einer Verstelleinrichtung befestigt ist, um durch Verstellung des Verstellelements und mehrerer hieran angelenkter Hebel gleichzeitig mehrere Leitschaufeln zu verstellen. Eine solche, gattungsgemäße Leitschaufelbaugruppe mit verstellbaren Leitschaufeln für einen Verdichter eines Gasturbinentriebwerks zeigt beispielsweise die EP 2 949 878 A1. Die Lagerzapfen der Leitschaufeln, die häufig auch als Spindeln bezeichnet werden, sind in der Praxis in radial vorstehenden, hülsenförmigen Lagerfortsätzen des Gehäuses vorgesehen. Diese Lagerfortsätze sind an einer Wandung des Gehäuses ausgeformt und stellen die drehbare Lagerung und Abstützung der Lagerzapfen sicher.

Das wenigstens eine Verstellelement der für die Verstellung der Leitschaufeln vorgesehenen Verstelleinrichtung stützt sich üblicherweise an einer Außenseite des Gehäuses ab und ist relativ hierzu in Umfangsrichtung verstellbar, um eine Drehung der Leitschaufeln um ihre jeweilige Drehachse zu bewirken. Das Verstellelement ist mit einem Verbindungselement der Verstelleinrichtung gekoppelt, beispielsweise mit diesem gelenkig verbunden, das wiederum zusätzlich mit einer Kurbelwelle der Verstelleinrichtung gekoppelt ist. Diese Kurbelwelle ist für die Steuerung einer Verstellbewegung des Verstellelements eingerichtet und vorgesehen und hierfür mittels eines Aktors um eine Längsachse der Kurbelwelle drehbar. Die Kurbelwelle weist mindestens ein mit dem Verbindungselement gekoppeltes Koppelelement auf, an dem das Verbindungselement angelenkt ist, um eine Drehbewegung der Kurbelwelle in eine Verstellbewegung des Verstellelements für die Verstellung der Leitschaufeln umzusetzen.

Üblicherweise weist die Kurbelwelle hierbei mehrere entlang der Längsachse zueinander beabstandete Koppelelemente auf, an denen jeweils ein Verbindungselement für ein zugeordnetes Verstellelement angelenkt ist. Derart können durch Drehung der Kurbelwelle synchron mehrere Verstellelemente verstellt und damit Leitschaufeln mehrerer Leitschaufelreihen verstellt werden. Über die Position der einzelnen Koppelelemente ist dabei vorgegeben, welchen Verstellweg das jeweils zugehörige und über ein Verbindungselement gekoppelte Verstellelement zurücklegt, wenn die Kurbelwelle um einen definierten Drehwinkel gedreht wird. In diesem Zusammenhang ist auch regelmäßig von Bedeutung, in welchem radialen Abstand zu der zentral verlaufenden Längsachse der Kurbelwelle das jeweilige Verbindungselement an seinem zugeordneten Koppelelement angelenkt ist. Die Anordnung der einzelnen Koppelelemente und insbesondere deren radiale Position beeinflusst schließlich die mögliche Verstellung der Leitschaufeln und insbesondere den Grad der Verstellung der Leitschaufeln unterschiedlicher Leitschaufelreihen, die auf einander abgestimmt werden müssen. Ist die optimale Position und Relativlage der einzelnen Koppelelemente bekannt, wird üblicherweise eine einstückige Kurbelwelle verwendet, an denen die einzelnen Koppelelemente ausgeformt sind. Eine Anpassung der möglichen Verstellwege ist hierbei jedoch nicht mehr oder allenfalls noch sehr einschränkt möglich.

Um insbesondere in der Entwicklungsphase des Triebwerks Komponenten der Kurbelwelle noch variabel anpassen zu können und insbesondere die radiale Position einzelner Koppelelemente für die Verstellung eines Verstellelements in Form eines Verstellrings für eine Leitschaufelreihe verändern zu können, schlägt beispielsweise die EP 2 949 878 A1 vor, die einzelnen und vorzugsweise mit Gabelköpfen ausgestalteten Koppelelemente über eine Keilverbindung an einer Vollwelle zu fixieren, sodass die radiale Position dieser Koppelelemente veränderbar ist. Auch ist vorgesehen, ein Koppelelement an einem axialen Ende der Kurbelwelle in unterschiedlichen Drehlagen an der Vollwelle fixieren zu können. Hierfür sind zwei Bolzenverbindungen mittels zweier Schraubbolzen vorgeschlagen, wobei eine der Bolzenverbindungen über verschiedene Bolzenöffnungen realisierbar ist, die entlang einer Kreislinie um die Längsachse nebeneinander angeordnet sind.

Die aus dem Stand der Technik bekannte Verstelleinrichtung bietet damit zwar bereits eine gewisse Flexibilität bei der Einstellung der Kurbelwelle für die zu erreichenden Verstellbewegung des Verstellelements. Die Veränderung eines Übersetzungsverhältnisses und auch der Umfang der Verstellmöglichkeiten der Koppelelemente in radialer Richtung sind jedoch bei einer Verstelleinrichtung der EP 2 949 878 A1 begrenzt.

Die EP 2 136 036 A1 offenbart ferner zwar eine gattungsgemäße Verstelleinrichtung. Die Flexibilität bei der Einstellung der Kurbelwelle ist aber auch hier begrenzt.

Es ist daher Aufgabe der Erfindung, eine in dieser Hinsicht verbesserte Verstelleinrichtung bereitzustellen, um insbesondere in einer Entwicklungsphase über die Kurbelwelle verschiedene aufeinander abgestimmten Verstellungen der Leitschaufeln vergleichsweise einfach realisieren zu können.

Diese Aufgabe wird mit einer Verstelleinrichtung des Anspruchs 1 gelöst.

Erfindungsgemäß ist hiernach eine Verstelleinrichtung für die Verstellung mehrerer Leitschaufeln eines Triebwerks vorgeschlagen, bei der die Kurbelwelle der Verstelleinrichtung modular mit mindestens zwei Wellenmodulen aufgebaut ist, die entlang der Längsachse der Kurbelwelle hintereinander angeordnet und in unterschiedlichen Drehlagen um die Längsachse der Kurbelwelle relativ zueinander über mindestens eine Verzahnung fixierbar sind. Die Kurbelwelle weist ferner ein Koppelelement auf, das an einem der mindestens zwei Wellenmodule vorgesehen ist. Das Koppelelement ist mit einem Verbindungselement gekoppelt, das wiederum mit einem Verstellelement für die Verstellung der Leitschaufeln gekoppelt ist, zum Beispiel einem Verstellring, der sich entlang des Umfangs eines Gehäuses erstreckt, an dem die Leitschaufeln verstellbar gelagert sind.

Die Erfindung geht hierbei von dem Grundgedanken aus, dass mindestens zwei benachbarte Wellenmodule der Kurbelwelle vorgesehen sind, die über mindestens eine Verzahnung relativ zueinander fixiert sind, wenn die Verstelleinrichtung und insbesondere die Kurbelwelle bestimmungsgemäß montiert ist. Um über die Kurbelwelle unterschiedliche Übersetzungsverhältnisse und Verstellungen der Leitschaufeln realisieren zu können, ohne eine neue Kurbelwelle verwenden zu müssen, sind die mindestens zwei Wellenmodule voneinander lösbar und dann relativ zueinander drehbar, bis die Kurbelwelle wieder bestimmungsgemäß montiert ist.

Unter einer Verzahnung der mindestens zwei Wellenmodule miteinander wird hierbei eine formschlüssige Verbindung mittels ineinandergreifender wechselseitig vorstehender Abschnitte verstanden, sodass die Wellenmodule drehfest aneinander festgelegt sind. Diese ineinandergreifenden Abschnitte können axial und/oder radial vorstehen und/oder zacken- oder stegförmig ausgebildet sein.

Um die mindestens zwei Wellenmodule über ihre Verzahnung in Eingriff miteinander zu halten, wenn die Kurbelwelle bestimmungsgemäß montiert ist, kann beispielsweise ein sich entlang der Längsachse erstreckende Zugstab vorgesehen sein. Mittels dieses Zugstabes sind dann die mindestens zwei Wellenmodule axial gegeneinander vorgespannt, wobei sich der Zugstab mit einem Schaft durch Durchgangsöffnungen der Wellenmodule erstreckt. Der Zugstab kann an einem ersten axialen Ende einen an einer Stirnseite eines ersten endseitigen Wellenmoduls anliegenden Kopf aufweisen. An einem zweiten axialen Ende des Zugstabes ist in einer Ausführungsvariante eine Mutter aufgedreht, die an einer Stirnseite eines zweiten endseitigen Wellenmoduls anliegt, um die entlang der Längsachse des Zugstabes hintereinander angeordneten Wellenmodule axial gegeneinander zu verspannen und über die jeweilige Verzahnung drehfest aneinander festzulegen.

Grundsätzlich kann die Kurbelwelle lediglich ein einzelnes Koppelelement für die Kopplung mit einem Verbindungselement aufweisen, das beispielsweise an dem Koppelelement angelenkt ist. In einer Ausführungsvariante weist die Verstelleinrichtung jedoch mindestens ein weiteres Verstellelement, beispielsweise für eine weitere axial beabstandete Leitschaufelreihe, auf sowie mindestens ein weiteres mit diesem weiteren Verstellelement gekoppeltes Verbindungselement. Für dieses weitere Verbindungselement ist dann an der Kurbelwelle ein weiteres Koppelelement vorgesehen, an dem das weitere Verbindungselement angelenkt ist und das sich an einem anderen Wellenmodul der Kurbelwelle befindet. Indem in dieser Variante gerade diese zwei Wellenmodule über mindestens eine Verzahnung lösbar aneinander fixiert sind, kann gerade deren Relativlage zueinander, z.B. in einem demontierten Zustand der Kurbelwelle, problemlos verändert werden.

Für die Fixierung der Wellenmodule aneinander in einem montierten Zustand der Kurbelwelle ist gemäß einem ersten Aspekt der Erfindung mindestens ein Zwischenstück vorgesehen. Über dieses Zwischenstück sind mindestens zwei (benachbarte) Wellenmodule in einer Drehlage um die Längsachse der Kurbelwelle relativ zueinander fixiert, wobei das Zwischenstück hierfür in eine erste Verzahnung des einen Wellenmoduls und eine zweite Verzahnung des anderen Wellenmoduls eingreift. Beispielsweise kann in diesem Zusammenhang vorgesehen sein, dass das Zwischenstück eine Außenverzahnung aufweist und jeweils in eine Innenverzahnung der zwei Wellenmodule eingreift.

Hierbei ist das Zwischenstück als Zahnradring ausgebildet. Ein solcher Zahnradring weist eine durchgehende oder gegebenenfalls entlang der Umfangsrichtung einfach oder mehrfach unterbrochene Außenverzahnung auf und greift einerseits in eine umlaufende Innenverzahnung des einen Wellenmoduls und andererseits in eine umlaufende Innenverzahnung des anderen Wellenmoduls ein. Die beiden Innenverzahnungen sind dabei an Stirnseiten der zwei Wellenmodule vorgesehen, die sich im bestimmungsgemäß montierten Zustand der Kurbelwelle einander gegenüberliegen. Derart sind die beiden Wellenmodule über das verzahnte Zwischenstück, zum Beispiel in Form des Zahnradringes, das in beide Innenverzahnungen eingreift, drehfest miteinander verbunden und relativ zueinander fixiert.

Alternativ oder ergänzend können gemäß einem zweiten Aspekt der Erfindung mindestens zwei Wellenmodule der Kurbelwelle über eine Hirth-Verzahnung in einer Drehlage um die Längsachse der Kurbelwelle relativ zueinander fixiert sein. Während bei der vorstehend erläuterten Variante mit einem außenverzahnten Zwischenstück die Verzahnung umfangsseitig vorgesehen ist, sieht eine Hirth-Verzahnung zweier Wellenmodule eine axial wirksame Fixierung über in axialer Richtung (bezüglich der Längsachse der Kurbelwelle) wechselseitig ineinandergreifende zackenförmige Vorsprünge vor. Es ist in diesem Zusammenhang selbstverständlich nicht ausgeschlossen, dass einzelne Wellenmodule der Kurbelwelle über ein außenverzahnten Zwischenstück und andere Wellenmodule über eine Hirth-Verzahnung aneinander fixiert sind. Eine axiale Vorspannung der einzelnen Wellenmodule kann im Übrigen auch in dieser Variante beispielsweise über einen sich entlang der Längsachse erstreckenden Zugstab aufgebracht sein.

In einem Ausführungsbeispiel sind wenigstens zwei unterschiedliche Typen von aneinander fixierten und in unterschiedlichen Drehlagen zueinander fixierbaren Wellenmodulen an der Kurbelwelle vorgesehen. Ein erster Typ Wellenmodul kann ein hieran vorgesehenes und gegebenenfalls radial verstellbares Koppelelement umfassen, während ein zweiter Typ Wellenmodul kein Koppelelement aufweist und der drehbaren Lagerung der Kurbelwelle dient. Der zweite Typwellenmodul ist hier dann zum Beispiel an wenigstens einem Lagerbock drehbar gelagert, der an einer äußeren Mantelfläche eines Gehäuses vorgesehen ist, an dem die Laueschaufeln verstellbar gelagert sind.

In einem Ausführungsbeispiel ist das Koppelelement bezüglich der Längsachse zwischen mindestens zwei Verstelllagen radial verstellbar an einem Wellenmodul angeordnet und in jeder der Verstelllagen fixierbar. In dieser Variante ist mit anderen Worten nicht nur die Möglichkeit vorgesehen, komplette Wellenmodule in ihrer Drehlage relativ zueinander anpassen zu können, sondern auch zusätzlich noch ein Koppelelement in seiner radialen Position und damit in seiner Länge, mit der es radial zu Längsachse der Kurbelwelle vorsteht, verändern zu können.

Beispielsweise kann das Koppelelement bezüglich der Längsachse zwischen mindestens zwei Verstelllagen radial verstellbar an der Kurbelwelle angeordnet und in jeder der Verstelllagen über mindestens eine Verzahnung fixierbar sein. Über die Fixierung mittels einer Verzahnung ist eine Verstelllage des Koppelelements formschlüssig effektiv gesichert. Gleichzeitig ist über die Verzahnung eine Verstellbarkeit des Koppelelements in definierten Stufen gewährleistet. Eine derartige Verstellbarkeit eines Koppelelements eine Kurbelwelle ist dabei auch insbesondere unabhängig von einem modularen Aufbau der Kurbelwelle mit mindestens zwei Wellenmodulen, die relativ zueinander über mindestens eine Verzahnung fixierbar sind.

Bei einem Koppelelement, das über eine Verzahnung in unterschiedlichen radialen Verstelllagen fixierbar ist, erstreckt sich die Verzahnung in einer Ausführungsvariante ebenfalls radial und ist beispielsweise an einem Befestigungskörper des Koppelelements ausgebildet. Ein solcher Befestigungskörper weist dann mindestens eine verzahnte Verzahnungsfläche für die Fixierung in den möglichen Verstelllagen auf.

In diesem Zusammenhang ist in einer Weiterbildung beispielsweise vorgesehen, dass an dem Befestigungskörper des Koppelelements zwei verzahnte Verzahnungsflächen vorgesehen, insbesondere hieran ausgebildet sind, und zwar an (entlang der Längsachse der Kurbelwelle) einander abgewandten Stirnseiten des Befestigungskörpers. Der Befestigungskörper weist somit in dieser Variante an axialen Stirnseiten Verzahnungsflächen auf, die mit (Gegen-) Verzahnungsflächen an der Kurbelwelle, insbesondere einem Wellenmodul, in Eingriff gebracht sind, wenn die Kurbelwelle bestimmungsgemäß montiert ist, um des jeweilige Koppelelement radial unbeweglich zu fixieren.

In einem Ausführungsbeispiel ist zur kompakten Ausgestaltung der Kurbelwelle der Befestigungskörper zumindest teilweise in einer Aussparung aufgenommen, an deren mindestens einer Innenwand eine verzahnte (Gegen-) Verzahnungsfläche vorgesehen ist, die mit einer Verzahnungsfläche des Befestigungskörpers zusammenwirkt. Über den Eingriff der Verzahnungsflächen des Befestigungskörpers einerseits und der Aussparung andererseits ist dabei eine sichere Arretierung des Koppelelements im montierten Zustand der Kurbelwelle erreicht.

In einem Ausführungsbeispiel ist die modular aufgebaute Kurbelwelle mit mindestens einem radial verstellbaren und über mindestens eine Verzahnung fixierbaren Koppelelement ausgestattet. Hierbei können die mindestens zwei Wellenmodule wie bereits vorstehend erläutert mittels eines sich entlang der Längsachse erstreckenden Zugstabes axial gegeneinander vorgespannt sein. Der die mindestens eine verzahnte Verzahnungsfläche ausbildende Befestigungskörper des Koppelelements weist dann in einem Ausführungsbeispiel eine sich radial erstreckende, langlochartig ausgestalte Durchgangsöffnung auf, durch die sich der Zugstab erstreckt und über die der Befestigungskörper radial bezüglich des Zugstabes verstellbar ist, wenn eine axiale Vorspannung der Wellenmodule reduziert oder beseitigt wird. Eine Reduzierung oder Beseitigung der über den Zugstab aufgebrachten Vorspannung ist beispielsweise zu Montagezwecken und/oder für die Veränderung eines Übersetzungsverhältnisses zwischen dem Drehwinkel der Kurbelwelle und dem Verstellweg des Verstellelements nötig. Hierbei kann auch ohne vollständige Entfernung des Zugstabes von den Wellenmodulen der Kurbelwelle ein Koppelelement radial verstellt werden. Indem der jeweilige Befestigungskörper über die sich radial erstreckende Durchgangsöffnung einen entsprechenden Freiheitsgrad aufweist, wenn die über den Zugstab aufgebrachte axiale Vorspannung der einzelnen Wellenmodule soweit reduziert wird, dass auch die Verzahnungsflächen des Befestigungskörpers einerseits und an einem Wellenmodul andererseits nicht mehr in Eingriff mit anderen gehalten werden, wird das Koppelelement radial verstellbar an dem jeweiligen Wellenmodul gehalten.

Für die (zusätzliche) Fixierung eines an sich radial verstellbaren Koppelelements ist in einem Ausführungsbeispiel ein längserstrecktes Befestigungselement, wie eine Schraube oder ein Bolzen vorgesehen, das sich im Wesentlichen senkrecht zur Längsachse der Kurbelwelle erstreckt und dann im Wesentlichen senkrecht zur Längsachse auch eine Haltekraft auf das Koppelelement aufbringt, um dieses in einer eingenommenen radialen Verstelllage zu sichern.

Grundsätzlich kann das Koppelelement einen Gabelkopf für die Kopplung mit dem Verbindungselement aufweisen. Bei dem Verbindungselement kann es sich beispielsweise um eine Verbindungsstange handeln, die einerseits an dem Gabelkopf und andererseits an einem Verstellring der Verstelleinrichtung angelenkt ist. Dabei ist der Verstellring mit mehreren Leitschaufeln derart gekoppelt, dass über eine Drehbewegung der Kurbelwelle und die hieraus resultierende Verstellbewegung des Verstellrings entlang einer Umfangsrichtung mehrere Leitschaufeln synchron verstellt werden.

Die beigefügten Figuren veranschaulichen exemplarisch mögliche Ausführungsvarianten der erfindungsgemäßen Lösung.

Hierbei zeigen:
- Figuren 1A-1C: in unterschiedlichen Ansichten eine modular und mit mehreren radial verstellbaren Koppelelementen aufgebaute Kurbelwelle einer Ausführungsvariante einer erfindungsgemäßen Verstelleinrichtung für die Verstellung mehrerer Leitschaufeln eines Triebwerks;
- Figuren 2A-2B: in Explosionsdarstellung und in perspektivischer Darstellung zwei Wellenmodule der Kurbelwelle der Figuren 1A bis 1C, die über ein außenverzahnte Zwischenstück drehfest in einer bestimmten Drehlage relativ zueinander miteinander verbunden werden;
- Figur 2C: eine Explosionsdarstellung der Wellenmodule der Figuren 2A und 2B mit einem einen Gabelkopf aufweisenden Koppelelement, das an einem der Wellenmodule in unterschiedlichen radialen Verstelllagen fixierbar ist;
- Figur 3: das Wellenmodul mit dem Koppelelement im zusammengebauten Zustand;
- Figur 4: zwei alternativ ausgestaltete Wellenmodule mit hieran integral ausgebildeten Koppelelementen, die über eine Hirth-Verzahnung drehfest aneinander festgelegt sind;
- Figur 5A: ausschnittsweise und in perspektivischer Ansicht eine aus dem Stand der Technik bekannte Anordnung mit mehreren Leitschaufelbaugruppen mit je einer Leitschaufelreihe und mehreren Laufschaufelbaugruppen;
- Figur 5B: eine aus dem Stand der Technik bekannte und auf der Anordnung der Figur 5A aufbauende Verstelleinrichtung für die Verstellung von Leitschaufeln mehrerer Leitschaufelreihen mittels mindestens einer drehbaren Kurbelwelle und mehreren hieran vorgesehenen Koppelelementen;
- Figur 6: in Schnittdarstellung schematisch ein Gasturbinentriebwerk, in dem wenigstens eine erfindungsgemäße Leitschaufelbaugruppe Verwendung findet.

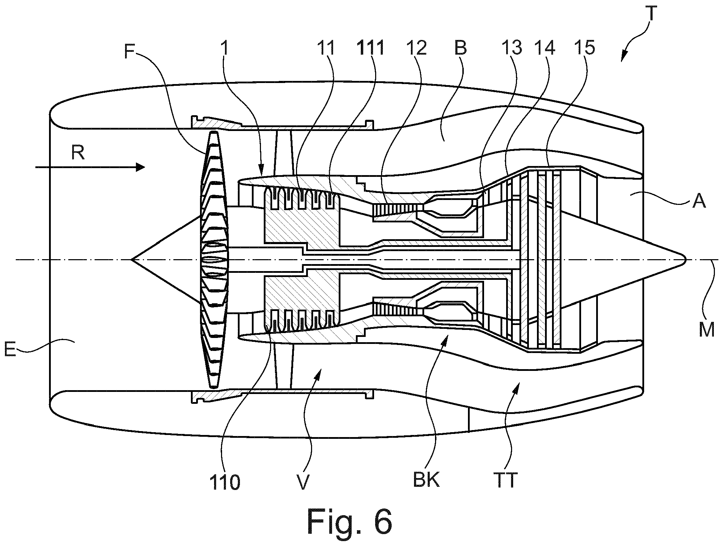

Die Figur 6 veranschaulicht schematisch und in Schnittdarstellung ein (Gasturbinen-) Triebwerk T, bei dem die einzelnen Triebwerkskomponenten entlang einer Mittelachse oder Rotationsachse M hintereinander angeordnet sind. An einem Einlass oder Intake E des Triebwerks T wird Luft entlang einer Eintrittsrichtung E mittels eines Fans F angesaugt. Angetrieben wird dieser Fan F über eine Welle, die von einer Turbine TT in Drehung versetzt wird. Die Turbine TT schließt sich hierbei an einen Verdichter V an, der beispielsweise einen Niederdruckverdichter 11 und einen Hochdruckverdichter 12 aufweist, sowie gegebenenfalls noch einen Mitteldruckverdichter. Der Fan F führt einerseits dem Verdichter V Luft zu sowie andererseits einem Bypasskanal B zur Erzeugung des Schubs. Die über den Verdichter V geförderte Luft gelangt schließlich in einen Brennkammerabschnitt BK, in dem die Antriebsenergie zum Antreiben der Turbine TT erzeugt wird. Die Turbine TT weist hierfür eine Hochdruckturbine 13, eine Mitteldruckturbine 14 und eine Niederdruckturbine 15 auf. Die Turbine TT betreibt über die bei der Verbrennung freiwerdende Energie den Fan F an, um dann über die in den Bypasskanal B geförderte Luft den erforderlichen Schub zu erzeugen. Die Luft verlässt hierbei den Bypasskanal B im Bereich eines Auslasses A am Ende des Triebwerks T, an dem die Abgase aus der Turbine TT nach außen strömen. Der Auslass A weist hierbei üblicherweise eine Schubdüse auf.

Der Verdichter V umfasst mehrere in axialer Richtung hintereinander liegende Reihen von Laufschaufeln 110 und dazwischen liegende Reihen von Leitschaufeln 111 im Bereich des Niederdruckverdichters 11. Die um die Mittelachse M rotierenden Reihen von Laufschaufeln 110 und die Reihen stationärer Leitschaufeln 111 sind abwechselnd entlang der Mittelachse M angeordnet und in einem (Verdichter-) Gehäuse 1 des Verdichters V aufgenommen. Die einzelnen Leitschaufeln 111 sind an dem ein- oder mehrteiligen Gehäuse 1 verstellbar gelagert - üblicherweise zusätzlich zu einer radial inneren Lagerung an der Nabe des Verdichters V.

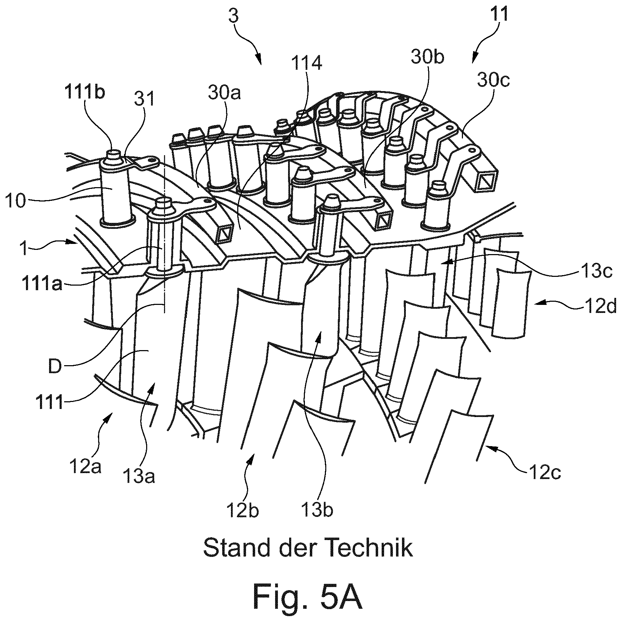

Die Figur 5A zeigt des Weiteren ausschnittsweise in größerem Detaillierungsgrad eine aus dem Stand der Technik bekannte Anordnung von Laufschaufelreihen 12a bis 12d und Leitschaufelreihen 13a bis 13c für den Niederdruckverdichter 11. Die Leitschaufeln 111 der hintereinander angeordneten Leitschaufelreihen 13a, 13b und 13c sind verstellbar an dem Gehäuse 1 gelagert, um die Stellung der Leitschaufeln 111 in Abhängigkeit von der Verdichterdrehzahl ändern zu können. Hierfür ist ein Lagerzapfen 111a jeder Laufschaufel 111 drehbar in einer Lageröffnung gelagert, die durch einen hülsenförmigen und radial nach außen vorspringenden Lagerfortsatz 10 des Gehäuses 1 ausgebildet ist. Jeder Lagerzapfen 111a ist in einem zugehörigen Lagerfortsatz 10 um eine Drehachse D drehbar gelagert und abgestützt. Dabei durchgreift jeder Lagerzapfen 111a seinen zugeordneten Lagerfortsatz 10, sodass an der Außenseite des Gehäuses 1 ein Zapfenende 111b aus dem Lagerfortsatz 10 herausragt.

An den einzelnen Zapfenenden 111b kann somit jeweils ein Verstellhebel 31 einer (Leitschaufel-) Verstelleinrichtung 3 angreifen, um den Lagerzapfen 111a drehen und damit die Stellung der zugehörigen Leitschaufel 111 ändern zu können. Die Hebel 31 einer Leitschaufelreihe 13a, 13b oder 13c sind dabei jeweils an einem Verstellelement in Form eines Verstellrings 30a, 30b oder 30c der Verstelleinrichtung 3 angelenkt. Der - häufig mehrteilige, in wenigstens zwei Segmente unterteilte - Verstellring 30a, 30b, 30c erstreckt sich umfangsseitig entlang der äußeren Mantelfläche des Gehäuses 1. Durch Verstellung des Verstellrings 30a, 30b, 30c können somit die hieran angelenkten Verstellhebel 31 und mehrere, üblicherweise alle Leitschaufeln 111 einer Leitschaufelreihe 13a, 13b oder 13c verstellt werden. Die einzelnen Verstellringe 30a, 30b, 30c für die einzelnen Leitschaufelreihen 13a, 13b und 13c sind hierbei üblicherweise unabhängig voneinander verstellbar. Ein Verstellring 30a, 30b oder 30c stützt sich an einer Außenseite des Gehäuses 1 ab, beispielsweise an einer umfangsseitig umlaufenden Anlagefläche 114.

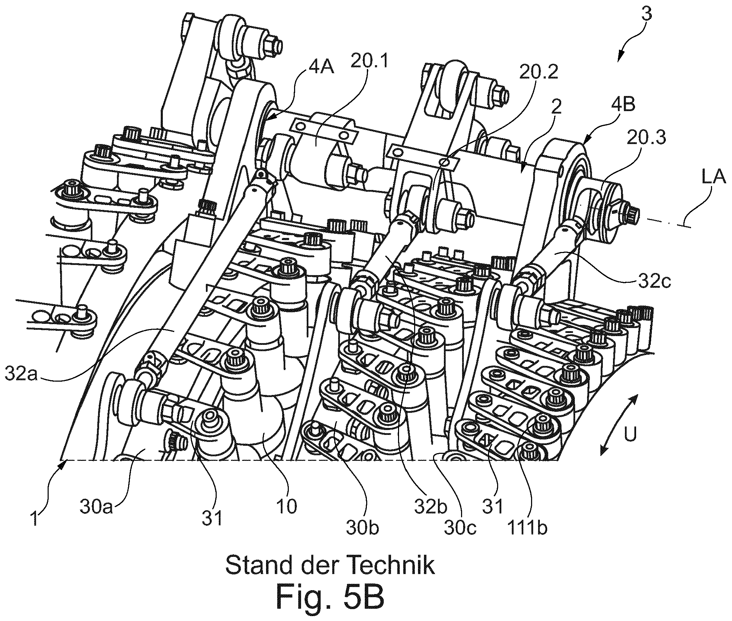

Mit der Figur 5B ist ferner ausschnittsweise und in ebenfalls perspektivischer Darstellung eine aus dem Stand der Technik bekannte Verstelleinrichtung 3 für die Verstellung der Leitschaufeln 111 näher veranschaulicht. Hier ist zusätzlich zu einzelnen Verstellringen 30a, 30b, 30c für die einzelnen Laufschaufelreihen 13a, 13b, 13c eine Kurbelwelle 2 für die Verstellung der einzelnen Verstellringe 30a, 30b, 30c dargestellt. Die Kurbelwelle 2 ist an Lagerböcken 4A, 4B an einer äußeren Mantelfläche des Gehäuses 1 um ihre Längsachse LA drehbar gelagert. An der Kurbelwelle 2 sind ferner mehrere Koppelelemente 20.1, 20.2, 20.3 mit jeweils einem Gabelkopf 201 vorgesehen, an dem ein Verbindungselement in Form einer Verbindungsstange 32a, 32b oder 32c angelenkt ist. Jede Verbindungsstange 32a, 32b und 32c ist einem der Verstellringe 30a, 30b, 30c zugeordnet und mit diesem gelenkig verbunden. Bei Drehung der Kurbelwelle 2 wird damit eine Verstellkraft an die einzelnen Verstellringe 30a bis 30c übertragen, um diese entlang des Umfangs in einer Umfangsrichtung U zu verstellen und hierbei über die mit dem jeweiligen Verstellringe 30a bis 30c verbundenen Verstellhebel 31 die Leitschaufeln 111 der unterschiedlichen Leitschaufelreihen 13a bis 13c um ihre jeweilige Drehachse D zu drehen.

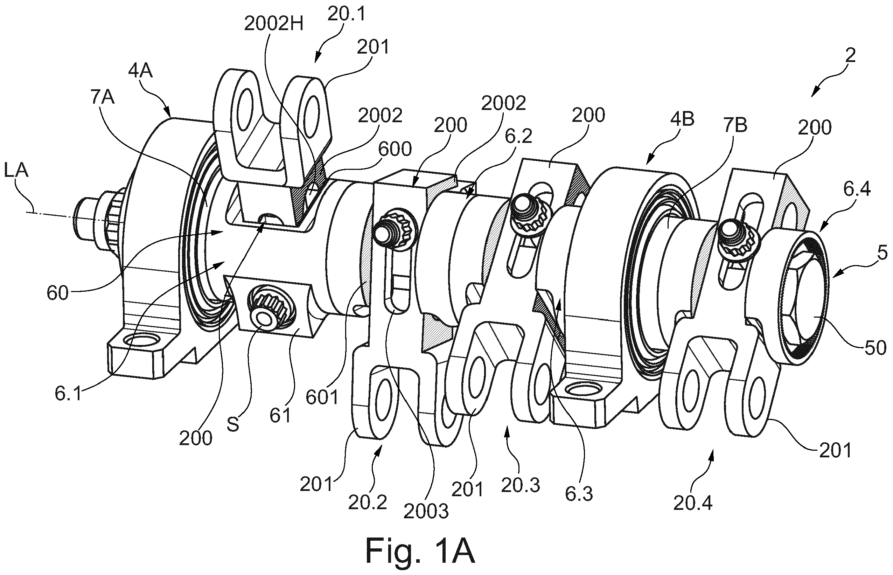

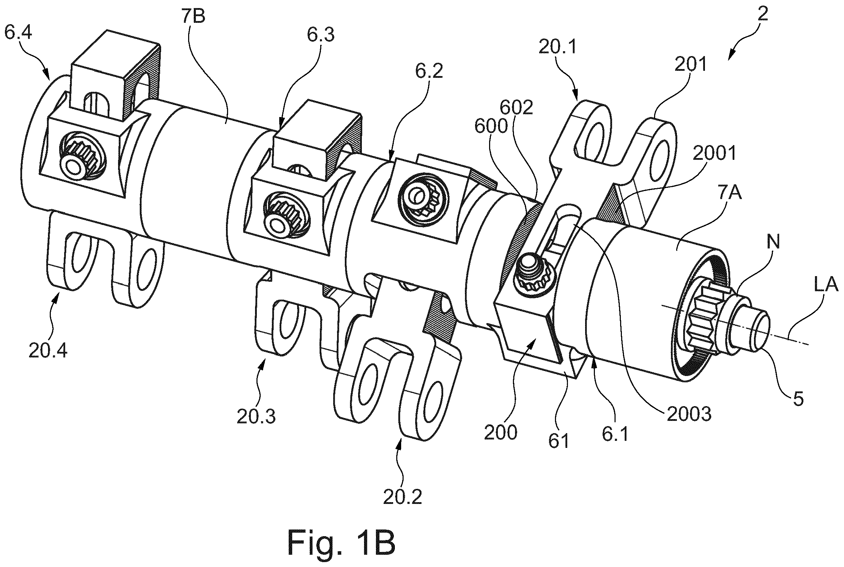

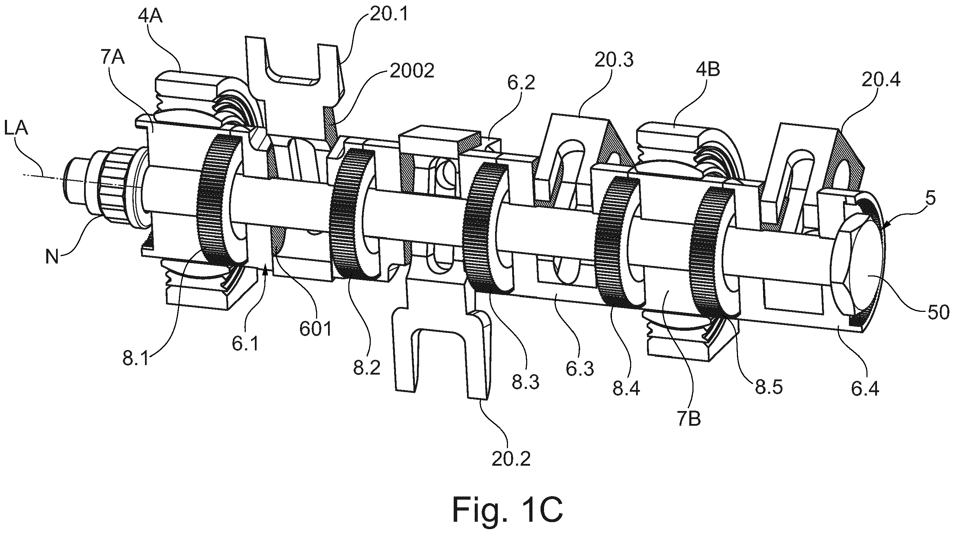

Wie stark die einzelnen Leitschaufeln 111 der unterschiedlichen Leitschaufelreihen 13a bis 13c bei Drehung der Kurbelwelle 2 verstellt werden und insbesondere zu welchem Zeitpunkt und um welches Maß die einzelnen Leitschaufeln 111 einer Leitschaufelreihe 13a bis 13c im Verhältnis zu den anderen Leitschaufelreihen 13a bis 13c verstellt werden, hängt maßgeblich von der (Winkel-) Position der einzelnen Koppelelemente 20.1, 20.2 und 20.3 relativ zueinander sowie von deren radialen Position bezüglich der Längsachse LA der Kurbelwelle 2 ab. Im bestimmungsgemäß montierten Zustand der Kurbelwelle 2 und im Betrieb des Triebwerks T sind die Positionen der Koppelelemente 20.1 bis 20.3 unveränderlich und wurden im Vorfeld an die Betriebsbedingungen des Triebwerks T angepasst. Gerade während der Entwicklungsphase des Triebwerks T ist es jedoch nicht unüblich, dass unterschiedliche Übersetzungs- und Verstellverhältnisse für die Verstellung der Leitschaufeln 111 der einzelnen Leitschaufelreihen 13a bis 13c getestet werden sollen. Hierfür hat es sich als vorteilhaft herausgestellt, die Koppelelemente 20.1 bis 20.3 an der Kurbelwelle 2 verstellbar auszuführen, so dass ohne Austausch der Kurbelwelle 2 die entsprechenden Verhältnisse variiert werden können. Hierbei ist vorgesehen, dass die Koppelelemente 20.1 bis 20.3 radial bezüglich der Längsachse LA der Kurbelwelle 2 verstellt werden können, beispielsweise entsprechend der Lehre der EP 2 949 878 A1 über ein Keilverbindung. Die radiale Verstellbarkeit der einzelnen Koppelelemente 20.1 bis 20.3 ist hierbei jedoch beschränkt. Ferner ist auch eine Einstellung der Drehlagen der einzelnen Koppelelemente 20.1 bis 20.3 um die Längsachse LA relativ zueinander nicht möglich. Hierfür würde üblicherweise eine gänzlich neue Kurbelwelle 2 bereitgestellt werden müssen. Insbesondere in dieser Hinsicht schaffen die erfindungsgemäßen Ausführungsvarianten einer Verstelleinrichtung 3 der Figuren 1A bis 4 Abhilfe.

So ist eine Verstelleinrichtung 3 mit einer in den Figuren 1A bis 1C in unterschiedlichen Ansichten dargestellte Kurbelwelle 2 vorgeschlagen. Diese Kurbelwelle 2 ist modular mit mehreren Wellenmodulen 6.1, 6.2, 6.3, 6.4, 7A und 7B aufgebaut. Die Drehung der Kurbelwelle 2 um ihre Längsachse LA erfolgt dabei über einen vorliegend nicht dargestellten Aktor. Dieser Aktor greift beispielsweise im Bereich eines vorderen oder hinteren axialen Endes der Kurbelwelle 2 an. Die Kurbelwelle 2 umfasst vorliegend unterschiedliche Typen von Wellenmodulen, nämlich (a) Wellenmodule 6.1 bis 6.4, die als Haltermodule ausgebildet sind und jeweils ein Koppelelement 20.1 bis 20.4 mit einem Gabelkopf 201 für die Anlenkung einer Verbindungsstange 23a bis 23c aufweisen, sowie (b) Lagermodule 7A, 7B ohne Koppelelement, die zur drehbaren Lagerung der Kurbelwelle 2 an den Lagerbrocken 4A und 4B eingerichtet sind. Beispielsweise sind die Lagermodule 7A und 7B hierfür rohr- oder hülsenförmig ausgebildet an dem jeweils zugeordneten Lagerbock 7A oder 7B drehbar aufgenommen.

Die einzelnen Wellenmodule 6.1 bis 6.4, 7A, 7B sind untereinander über mindestens eine Verzahnung in dem in den Figuren 1A bis 1C dargestellten bestimmungsgemäß montierten Zustand der Kurbelwelle 2 aneinander fixiert. Die einzelnen Wellenmodule 6.1 bis 6.4, 7A, 7B sind jedoch grundsätzlich in unterschiedlichen Drehlagen um die Längsachse LA relativ zueinander fixierbar, sodass einzelne Wellenmodule 6.1 bis 6.4, 7A, 7B relativ zueinander unterschiedlich ausgerichtet werden können und anschließend wieder aneinander fixiert und drehfest miteinander verbunden werden können.

Um die einzelnen entlang der Längsachse LA hintereinander angeordneten Wellenmodule 6.1 bis 6.4, 7A und 7B relativ zueinander zu fixieren und drehfest miteinander zu verbinden, ist ein Zugstab 5 vorgesehen. Dieser Zugstab 5 erstreckt sich durch entsprechende Durchgangsöffnungen 60H, 70H der einzelnen Wellenmodule 6.1 bis 6.4, 7A, 7B hindurch. Über einen Kopf 50 des Zugstabes 5, der an einem ersten axialen Ende der Kurbelwelle 2 an einem Haltermodul 6.4 anliegt, und eine auf den Zugstab 5 an dem anderen axialen Ende der Kurbelwelle 2 aufgedrehte Mutter N sind die einzelnen Wellenmodule 6.1 bis 6.4, 7A und 7B axial gegeneinander vorgespannt. Die Mutter N wirkt hierbei vorliegend auf ein Lagermodul 7A ein.

Für die drehfeste Verzahnung der einzelnen Wellenmodule 6.1 bis 6.4, 7A und 7B untereinander weist jedes der Wellenmodule 6.1 bis 6.4, 7A, 7B stirnseitig jeweils eine Innenverzahnung 608A, 608B oder 78 auf. Die stirnseitigen Enden der einzelnen Wellenmodule 6.1 bis 6.4, 7A, 7B weisen dabei jeweils einen kreisförmigen Querschnitt auf, wobei die jeweilige Innenverzahnung 608A, 608B oder 78 umlaufend an einem kreisringförmigen überstehenden Rand an jeder Stirnseite des jeweiligen Wellenmoduls 6.1 bis 6.4, 7A, 7B ausgebildet ist. Für die drehfeste Verbindung mit einem benachbarten Wellenmodul 6.1 bis 6.4, 7A, 7B ist jeweils ein zwei Wellenmodulen 7A/6.1, 6.1/6.2, 6.2/6.3, 6.3/7B oder 7B/6.4 zugeordnetes außenverzahntes Zwischenstück in Form eines Zahnradringes 8.1, 8.2, 8.3, 8.4 oder 8.5 vorgesehen.

An einer äußeren Mantelfläche ist an jedem Zahnradring 8.1 bis 8.5 eine ebenfalls umfangsseitig umlaufende Außenverzahnung 88 ausgebildet. Die jeweils ringförmig überstehenden, innenverzahnten Ränder jedes Wellenmoduls 6.1 bis 6.4, 7A, 7B stehen jeweils axial so weit hervor, dass die Außenverzahnung 88 eines Zahnradringes 8.1 bis 8.5 zwischen beiden benachbarten Wellenmodulen aufgenommen werden kann und in die Innenverzahnungen 608A/608B, 608B/78 oder 78/608A zweier benachbarter Wellenmodule eingreift, sodass diese hierüber drehfest miteinander verbunden sind, wenn über den Zugstab 5 und die hieran aufgedrehte Mutter N eine ausreichende axiale Vorspannung auf die entlang der Längsachse LA angeordneten Wellenmodule 6.1 bis 6.4, 7A, 7B aufgebracht ist. Dabei weist jedes der Zwischenstücke 8.1 bis 8.5 eine Durchgangsöffnung 80H für den Zugstab 5 auf.

Über die Verzahnungen der einzelnen Wellenmodule 6.1 bis 6.4, 7A, 7B ist eine hochbelastbare formschlüssige Verbindung und Fixierung der einzelnen Wellenmodule 6.1 bis 6.4, 7A, 7B miteinander erreicht. Gleichzeitig können die einzelnen Wellenmodule 6.1 bis 6.4, 7A, 7B auch problemlos unterschiedliche Relativlagen zueinander einnehmen, wenn eine axiale Vorspannung reduziert oder beseitigt wird und die einzelnen Wellenmodule - z.B. nach Aufdrehen der Mutter N - entlang der Längsachse LA relativ zueinander verschoben wurden.

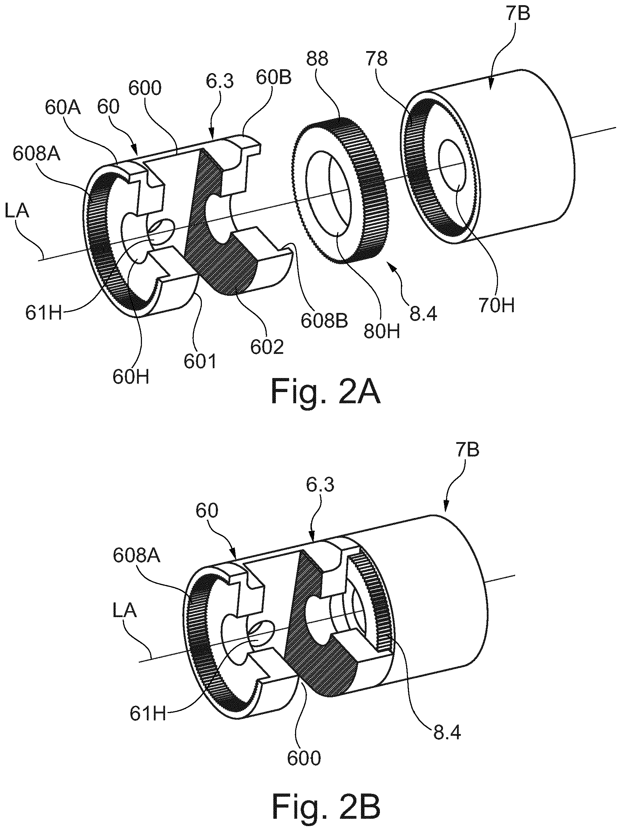

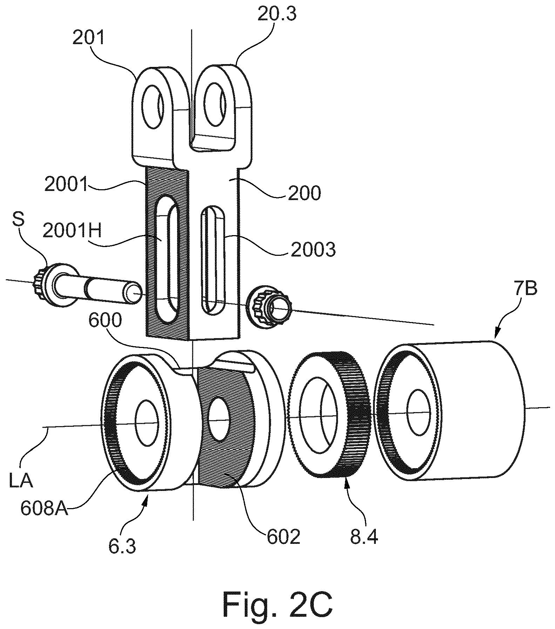

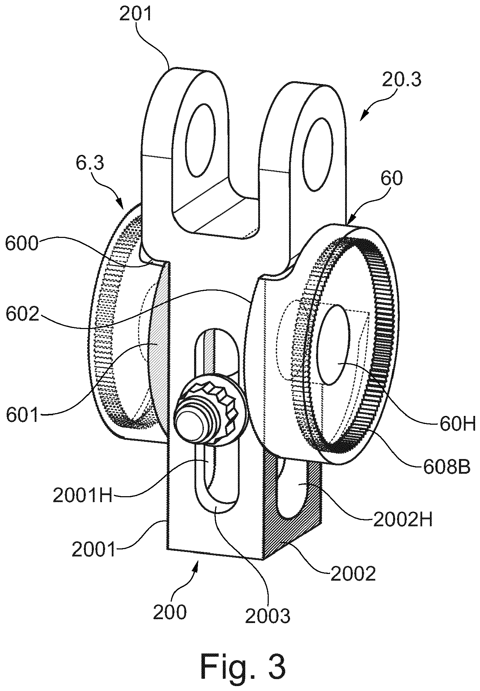

Als zusätzliche Verstellmöglichkeit ist an den Haltermodulen 6.1 bis 6.4 der Kurbelwelle 2 jedes Koppelelement 20.1 bis 20.4 radial verstellbar vorgesehen. Hierzu ist - wie anhand der Figuren 2A bis 2C und 3 exemplarisch für ein Haltermodul 6.3 mit einem Koppelelement 20.3 veranschaulicht ist - jedes Haltermodul 6.1 bis 6.4 mit einer zentral angeordneten Aussparung 600 versehen, über die ein Trägerkörper 60 jedes Haltermoduls 6.1 bis 6.4 in zwei (vordere und hintere) Modulabschnitte 60A und 60B unterteilt wird. Diese beiden Modulabschnitte 60A, 60B sind über einen sich axial erstreckenden und im Querschnitt kreissegmentförmigen Befestigungsabschnitt 61 miteinander verbunden. Teil jedes Modulabschnitts 60A, 60B ist der jeweilige stirnseitige vorstehende, innenverzahnte Rand für die drehfeste Verbindung mit einem benachbarten Wellenmodule 6.1 bis 6.4, 7A, 7B mittels des zugeordneten Zahnradringes 8.1 bis 8.5.

Sich entlang der Längsachse LA einander gegenüberliegende Innenwände der Aussparung 600, die von den beiden Modulabschnitten 60A und 60B ausgebildet sind, weisen jeweils vollflächig - lediglich unterbrochen durch einen Teil der Durchgangsöffnung 60H für den Zugstab 5 - eine verzahnte Verzahnungsfläche 601 oder 602 auf. Mit diesen sich gegenüberliegenden Verzahnungsflächen 601, 602 kann jeweils eine verzahnte Verzahnungsfläche 2001, 2002 eines Befestigungskörpers 200 des zugeordneten Koppelelements 20.1-20.4 in formschlüssigen Eingriff gebracht werden, um das jeweilige Koppelelement 20.1 bis 20.4 in einer vorgegebenen radialen Position festzulegen.

Der vorliegend längserstreckte und im Querschnitt rechteckförmige Befestigungskörper 200 eines jeden Koppelelements 20.1 bis 20.4 liegt bei bestimmungsgemäß montierter Kurbelwelle 2 über seine einander abgewandten Verzahnungsflächen 2001 und 2002 an den zugeordneten (Gegen-) Verzahnungsflächen arretierend an. Hierbei unterstützt die über den Zugstab 5 aufgebrachte axiale Vorspannung das Ineinandergreifen der jeweiligen Verzahnungsflächen 601/2001 und 602/2002 des Befestigungskörpers 200 einerseits und des zugeordneten Wellenmoduls 6.1, 6.2, 6.3 oder 6.4 andererseits.

Zur (zusätzlichen) Fixierung eines Koppelelements 20.1, 20.2, 20.3 oder 20.4 an einem Haltermodul 6.1, 6.2, 6.3 oder 6.4 ist jeder Befestigungskörper 200 eines Koppelelements 20.1 bis 20.4 mit zwei Langlöchern 2003 versehen, die in radialer Richtung längserstreckt ausgebildet sind und einander gegenüberliegend an zwei Wandungen des Befestigungskörpers 200 ausgebildet sind. Durch die zwei Langlöcher 2003 greift im Wesentlichen senkrecht zur Längsachse LA ein Befestigungselement in Form eines Schraubbolzen S. Dieser Schraubbolzen S liegt mit seinem Kopf an dem Befestigungsabschnitt 61 des jeweiligen Haltemoduls 6.1 bis 6.4 an und erstreckt sich mit seinem Schaft durch eine Durchgangsöffnung 61H in dem Befestigungsabschnitt 61 sowie weiter durch die sich gegenüberliegenden Langlöcher 2003 des Befestigungskörpers 200. An einem von dem Befestigungskörper 200 vorstehenden Ende des Schraubbolzen S ist eine Mutter aufgedreht, um zusätzlich eine Haltekraft senkrecht zur Längsachse LA für die Fixierung eines Koppelelements 20.1 bis 20.4 in einer eingenommenen radialen Verstelllage aufzubringen.

Zur Veränderung der radialen Position der Gabelköpfe 201 eines Koppelelements 20.1 bis 20.4 wird folglich die über den Zugstab 5 aufgebrachte axiale Vorspannung durch Aufdrehen der Mutter N am Ende des Zugstabes 5 reduziert. Ferner wird durch Lösen der Mutter des Schraubbolzen S an dem jeweiligen Haltermodul 6.1 bis 6.4 eine Verstellung des jeweiligen Befestigungskörpers 200 und des hiermit einstückig ausgebildeten Gabelkopfes 201 relativ zu dem Trägerkörper 60 des Haltermoduls 6.1 bis 6.4 ermöglicht. Die unterschiedlichen einnehmbaren Verstelllagen sind hierbei über die ineinandergreifenden Zähne der unterschiedlichen Verzahnungsflächen 601/2001 und 2002/602 vorgegeben.

Damit das Koppelelement 20.1-20.4 relativ zu dem jeweiligen Trägerkörper 60 sowie radial zu dem Zugstab 5 verstellt werden kann, weist der Befestigungskörper 200 an jeder der Verzahnungsflächen 2001 und 2002 ein sich radial erstreckendes durchgehendes Langloch 2001H oder 2002H auf, durch die sich der Zugstab 5 hindurch erstreckt.

Die anhand der Figuren 1A bis 1C, 2A bis 2C und 3 dargestellte Ausführungsvariante einer Kurbelwelle 2 für eine erfindungsgemäße Verstelleinrichtung 3 ist in doppelter Hinsicht variabel, um ein Übersetzungs- und Verstellwegsverhältnis der einzelnen durch Drehung der Kurbelwelle 2 zu verstellenden Leitschaufeln 111 unterschiedlicher Leitschaufelreihen 13a bis 13c einzustellen. Einerseits sind die einzelnen Wellenmodule 6.1 bis 6.4, 7A, 7B in unterschiedlichen Drehlagen relativ zueinander fixierbar, um damit die Ausrichtung und Winkellage der an einzelnen Haltermodulen 6.1 bis 6.4 vorgesehenen Koppelelementen 20.1 bis 20.4 relativ zueinander verändern zu können, an denen die mit den Verstellringen 30a, 30b und 30c gekoppelten Verbindungsstangen 32a, 32b, 32c angelenkt sind. Andererseits ist auch jedes Koppelelement 20.1 bis 20.4 mit dem für die Anlenkung vorgesehenen Gabelkopf 201 in radialer Richtung bezüglich der Längsachse LA der Kurbelwelle 2 bei Bedarf verstellbar und damit die Länge variierbar, mit der ein Gabelkopf 201 eines Koppelelements 20.1 bis 20.4 radial bezüglich der Längsachse LA vorsteht. Gleichzeitig ist über die jeweilige Fixierung mittels einer oder mehrerer Verzahnungen im bestimmungsgemäß montierten Zustand der Kurbelwelle 2 eine hochbelastbare formschlüssige Verbindung der einzelnen Komponenten der Kurbelwelle 2 untereinander gewährleistet.

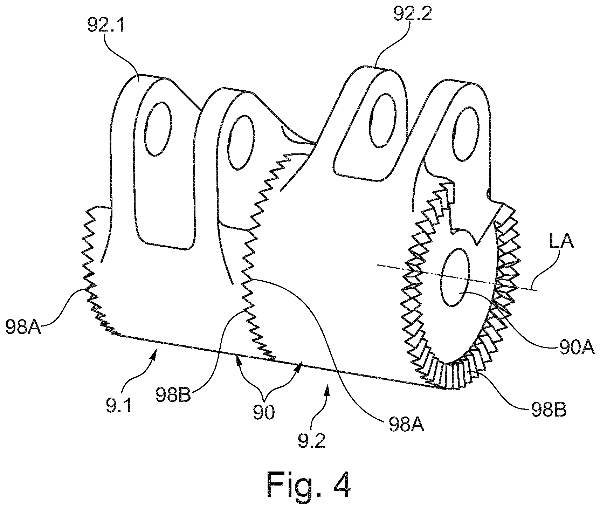

Anhand der Figur 4 ist eine weitere Ausführungsvariante für die drehfeste, jedoch lösbare Verbindung zweier Wellenmodule 9.1, 9.2 einer modular aufgebauten Kurbelwelle 2 für eine erfindungsgemäße Verstelleinrichtung 3 veranschaulicht. Die hier dargestellten Wellenmodule 9.1, 9.2 sind integral und damit einstückig mit Koppelelementen 92.1 und 92.2 ausgebildet, an denen die Anlenkung der jeweiligen Verbindungsstange 30a bis 30c erfolgt. Die Koppelelemente 92.1 und 92.2 stehen hierbei jeweils radial von einem Grundkörper 90 eines Wellenmoduls 9.1 oder 9.2 radial hervor.

Jedes Wellenmodul 9.1, 9.2 weist ferner eine Durchgangsöffnung 90H für den Zugstab 5 auf. Die durch den Zugstab 5 aufgebrachte axiale Vorspannung wird dabei vorliegend ebenfalls zur Sicherung eines wechselseitigen formschlüssigen Verzahnungseingriffes genutzt, um die beiden Wellenmodule 9.1 und 9.2 im bestimmungsgemäß montierten Zustand der Kurbelwelle 2 drehfest aneinander zu fixieren. Hierbei ist vorliegend eine Hirth-Verzahnung 98A, 98B vorgesehen. Eine entsprechende kreisringförmig umlaufende Verzahnungsfläche für die jeweilige Hirth-Verzahnung 98A oder 98B ist dabei an beiden axialen Stirnseiten jedes Wellenmoduls 9.1,9.2 ausgebildet.

### Bezugszeichenliste

- 1: Gehäuse
- 10: Lagerfortsatz
- 11: Niederdruckverdichter
- 110: Laufschaufel
- 111: Leitschaufel
- 111a: Lagerzapfen
- 111b: Zapfenende
- 114: Mantelfläche
- 12: Hochdruckverdichter
- 12a - 12d: Laufschaufelreihe
- 13: Hochdruckturbine
- 13a - 13c: Leitschaufelreihe
- 14: Mitteldruckturbine
- 15: Niederdruckturbine
- 2: Kurbelwelle
- 20.1 -20.4: Koppelelement
- 200: Befestigungskörper
- 2001, 2002: Verzahnungsfläche
- 2001H, 2002H: Langloch / Durchgangsöffnung
- 2003: Langloch / Durchgangsöffnung
- 201: Gabelkopf
- 3: (Leitschaufel-) Verstelleinrichtung
- 30a, 30b, 30c: Verstellring (Verstellelement)
- 31: Verstellhebel
- 32a, 32b, 32c: Verbindungsstange (Verbindungselement)
- 4A, 4B: Lagerbock
- 5: Zugstab
- 50: Kopf
- 6.1 - 6.4: Haltermodul (Wellenmodul)
- 60: Trägerkörper
- 600: Aussparung
- 601, 602: Verzahnungsfläche
- 608A, 608B: Innenverzahnung
- 60A, 60B: Modulabschnitt
- 60H: Durchgangsöffnung
- 61: Befestigungsabschnitt
- 61H: Durchgangsöffnung
- 70H: Durchgangsöffnung
- 78: Innenverzahnung
- 7A, 7B: Lagermodul (Wellenmodul)
- 8.1 - 8.5: Zahnradring (Zwischenstück)
- 80H: Durchgangsöffnung
- 88: Außenverzahnung
- 9.1, 9.2: Wellenmodul
- 90H: Durchgangsöffnung
- 92.1, 92.2: Koppelelement
- 98A, 98B: Hirth-Verzahnung
- A: Auslass
- B: Bypasskanal
- BK: Brennkammerabschnitt
- D: Drehachse / Spindelachse
- E: Einlass / Intake
- F: Fan
- L: Leitschaufelbaugruppe
- LA: Längsachse
- M: Mittelachse / Rotationsachse
- N: Mutter
- R: Eintrittsrichtung
- S: Schraubbolzen (Befestigungselement)
- T: Gasturbinentriebwerk
- TT: Turbine
- U: Umfangsrichtung
- V: Verdichter

## Patentansprüche

1. Verstelleinrichtung (3) für die Verstellung mehrerer Leitschaufeln (111) eines Triebwerks (T), wobei
- die Verstelleinrichtung (3) mindestens ein mit den Leitschaufeln (111) gekoppeltes und verstellbar gelagertes Verstellelement (30a, 30b, 30c), ein mit dem Verstellelement (30a, 30b, 30c) gekoppeltes Verbindungselement (32a, 32b, 32c) sowie eine Kurbelwelle (2) für die Steuerung einer Verstellbewegung des Verstellelements (30) umfasst, und
- die Kurbelwelle (2) mindestens ein mit dem Verbindungselement (32a, 32b, 32c) gekoppeltes Koppelelement (20.1-20.4; 92.1, 92.2) aufweist, an dem das Verbindungselement (32a, 32b, 32c) angelenkt ist, um eine Drehbewegung der Kurbelwelle (2) um eine Längsachse (LA) der Kurbelwelle (2) in eine Verstellbewegung des Verstellelements (30a, 30b, 30c) für die Verstellung der Leitschaufeln (111) umzusetzen,
wobei die Kurbelwelle (2) modular mit mindestens zwei Wellenmodulen (6.1 - 6.4, 7A, 7B; 9.1, 9.2) aufgebaut ist, die entlang der Längsachse (LA) der Kurbelwelle (2) hintereinander angeordnet und in unterschiedlichen Drehlagen um die Längsachse (LA) relativ zueinander über mindestens eine Verzahnung (608A, 608B, 78, 88; 98A, 98B) fixierbar sind, und das Koppelelement (20.1-20.4; 92.1, 92.2) an einem der mindestens zwei Wellenmodule (6.1 - 6.4, 7A, 7B; 9.1, 9.2) der Kurbelwelle (2) vorgesehen ist,
**dadurch gekennzeichnet, dass**
- mindestens zwei Wellenmodule (6.1 - 6.4) über ein als Zahnradring (8.1 - 8.5) ausgebildetes Zwischenstück (8.1 - 8.5) in einer Drehlage um die Längsachse (LA) der Kurbelwelle (2) relativ zueinander fixiert sind, das in eine erste Verzahnung (608A, 608B 78) des einen Wellenmoduls (6.1 - 6.4, 7A, 7B) und eine zweite Verzahnung (608B, 78, 608A) des anderen Wellenmoduls (6.1 - 6.4, 7A, 7B) eingreift,
- und/oder mindestens zwei Wellenmodule (9.1, 9.2) über eine Hirth-Verzahnung (98A, 98B) in einer Drehlage um die Längsachse (LA) der Kurbelwelle (2) relativ zueinander fixiert sind.

2. Verstelleinrichtung nach Anspruch 1, **dadurch gekennzeichnet, dass** die Verstelleinrichtung (3) mindestens ein weiteres Verstellelement (30b, 30c, 30a) und mindestens ein weiteres mit dem weiteren Verstellelement (30b, 30c, 30a) gekoppeltes Verbindungselement (32b, 32c, 32a) umfasst und ein weiteres Koppelelement (20.1 - 20.4; 9.2, 9.1), an dem das weitere Verbindungselement (32b, 32c, 32a) angelenkt ist, an einem anderen Wellenmodul (6.1 - 6.4; 9.2, 9.1) der Kurbelwelle (2) vorgesehen ist.

3. Verstelleinrichtung nach Anspruch 1 oder 2, **dadurch gekennzeichnet, dass** das Zwischenstück (8.1 - 8.5) eine Außenverzahnung (88) aufweist und jeweils in eine Innenverzahnung (608A, 608B 78) der zwei Wellenmodule (6.1 - 6.4, 7A, 7B) eingreift.

4. Verstelleinrichtung nach einem der vorhergehenden Ansprüche, **dadurch gekennzeichnet, dass** das Koppelelement (20.1 - 20.4) bezüglich der Längsachse (LA) zwischen mindestens zwei Verstelllagen radial verstellbar an einem Wellenmodul (6.1 - 6.4) angeordnet und in jeder der Verstelllagen fixierbar ist.

5. Verstelleinrichtung nach Anspruch 4, **dadurch gekennzeichnet, dass** das Koppelelement (20.1 - 20.4) in jeder der Verstelllagen über mindestens eine Verzahnung (601, 2001; 602, 2002) fixierbar ist.

6. Verstelleinrichtung nach Anspruch 5, **dadurch gekennzeichnet, dass** das Koppelelement (20.1 - 20.4) einen Befestigungskörper (200) mit mindestens einer verzahnten Verzahnungsfläche (2001, 2002) für die Fixierung in einer der möglichen Verstelllagen aufweist.

7. Verstelleinrichtung nach dem Anspruch 6, **dadurch gekennzeichnet, dass** an dem Befestigungskörper (200) des Koppelelements (20.1 - 20.4) zwei verzahnte Verzahnungsflächen (2001, 2003) vorgesehen sind, und zwar an einander abgewandten Stirnseiten des Befestigungskörpers (200).

8. Verstelleinrichtung nach Anspruch 6 oder 7, **dadurch gekennzeichnet, dass** der Befestigungskörper (200) zumindest teilweise in einer Aussparung (600) aufgenommen ist, an deren mindestens einer Innenwand eine verzahnte Verzahnungsfläche (601, 602) vorgesehen ist, die mit einer Verzahnungsfläche (2001, 2002) des Befestigungskörpers (200) zusammenwirkt.

9. Verstelleinrichtung nach einem der Ansprüche 1 bis 4 und einem der Ansprüche 5 bis 8, **dadurch gekennzeichnet, dass** die mindestens zwei Wellenmodule (6.1 - 6.4, 7A, 7B) mittels eines sich entlang der Längsachse (LA) erstreckenden Zugstabes (5) axial gegeneinander vorgespannt sind und der Befestigungskörper (200) eine sich radial erstreckende Durchgangsöffnung (2001H, 2002H) aufweist, durch die sich der Zugstab (5) erstreckt und über die der Befestigungskörper (200) radial bezüglich des Zugstabes (5) verstellbar ist, wenn eine axiale Vorspannung der Wellenmodule (6.1 - 6.4, 7A, 7B) reduziert oder beseitigt wird.

10. Verstelleinrichtung nach einem der vorhergehenden Ansprüche, **dadurch gekennzeichnet, dass** das Koppelelement (20.1 - 20.4; 9.1, 9.2) einen Gabelkopf (201) für die Kopplung mit dem Verbindungselement (32a, 32b, 32c) aufweist.

11. Triebwerk mit wenigstens einer Verstelleinrichtung (3) nach einem der vorhergehenden Ansprüche 1 bis 10.

## Claims

1. Adjusting device (3) for adjusting a plurality of guide vanes (111) of an engine (T), wherein
- the adjusting device (3) comprises at least one adjustably mounted adjusting element (30a, 30b, 30c) coupled to the guide vanes (111), a connection element (32a, 32b, 32c) coupled to the adjusting element (30a, 30b, 30c), and a crankshaft (2) for controlling an adjusting movement of the adjusting element (30), and
- the crankshaft (2) has at least one coupling element (20.1-20.4; 92.1, 92.2) which is coupled to the connection element (32a, 32b, 32c) and on which the connection element (32a, 32b, 32c) is articulated in order to convert a rotary movement of the crankshaft (2) about a longitudinal axis (LA) of the crankshaft (2) into an adjusting movement of the adjusting element (30a, 30b, 30c) for adjusting the guide vanes (111),
wherein the crankshaft (2) is of modular design with at least two shaft modules (6.1 - 6.4, 7A, 7B; 9.1, 9.2) which are arranged behind one another along the longitudinal axis (LA) of the crankshaft (2) and can be fixed in different rotational positions about the longitudinal axis (LA) relative to one another via at least one toothing (608A, 608B, 78, 88; 98A, 98B), and the coupling element (20.1-20.4; 92.1, 92.2) is provided on one of the at least two shaft modules (6.1 - 6.4, 7A, 7B; 9.1, 9.2) of the crankshaft (2),
**characterized in that**
- at least two shaft modules (6.1 - 6.4) are fixed in a rotational position about the longitudinal axis (LA) of the crankshaft (2) relative to one another via an intermediate piece (8.1 - 8.5) which is designed as a gear ring (8.1 - 8.5) and which engages in a first toothing (608A, 608B, 78) of the one shaft module (6.1 - 6.4, 7A, 7B) and a second toothing (608B, 78, 608A) of the other shaft module (6.1 - 6.4, 7A, 7B),
- and/or at least two shaft modules (9.1, 9.2) are fixed in a rotational position about the longitudinal axis (LA) of the crankshaft (2) relative to one another via a Hirth toothing (98A, 98B).

2. Adjusting device according to Claim 1, **characterized in that** the adjusting device (3) comprises at least one further adjusting element (30b, 30c, 30a) and at least one further connection element (32b, 32c, 32a) coupled to the further adjusting element (30b, 30c, 30a), and a further coupling element (20.1 - 20.4; 9.2, 9.1), on which the further connection element (32b, 32c, 32a) is articulated, is provided on another shaft module (6.1 - 6.4; 9.2, 9.1) of the crankshaft (2).

3. Adjusting device according to Claim 1 or 2, **characterized in that** the intermediate piece (8.1 - 8.5) has an outer toothing (88) and in each case engages in an inner toothing (608A, 608B, 78) of the two shaft modules (6.1 - 6.4, 7A, 7B).

4. Adjusting device according to one of the preceding claims, **characterized in that** the coupling element (20.1 - 20.4) is arranged on a shaft module (6.1 - 6.4) so as to be radially adjustable between at least two adjusting positions with respect to the longitudinal axis (LA) and can be fixed in each of the adjusting positions.

5. Adjusting device according to Claim 4, **characterized in that** the coupling element (20.1 - 20.4) can be fixed in each of the adjusting positions via at least one toothing (601, 2001; 602, 2002).

6. Adjusting device according to Claim 5, **characterized in that** the coupling element (20.1 - 20.4) has a fastening body (200) with at least one toothed toothing surface (2001, 2002) for fixing in one of the possible adjusting positions.

7. Adjusting device according to Claim 6, **characterized in that** two toothed toothing surfaces (2001, 2003) are provided on the fastening body (200) of the coupling element (20.1 - 20.4), to be precise on mutually opposed end sides of the fastening body (200) .

8. Adjusting device according to Claim 6 or 7, **characterized in that** the fastening body (200) is at least partially received in a clearance (600) on whose at least one inner wall there is provided a toothed toothing surface (601, 602) which interacts with a toothing surface (2001, 2002) of the fastening body (200) .

9. Adjusting device according to one of Claims 1 to 4 and one of Claims 5 to 8, **characterized in that** the at least two shaft modules (6.1 - 6.4, 7A, 7B) are axially prestressed with respect to one another by means of a tension rod (5) extending along the longitudinal axis (LA), and the fastening body (200) has a radially extending through-opening (2001H, 2002H) through which the tension rod (5) extends and via which the fastening body (200) is radially adjustable with respect to the tension rod (5) if an axial prestressing of the shaft modules (6.1 - 6.4, 7A, 7B) is reduced or removed.

10. Adjusting device according to one of the preceding claims, **characterized in that** the coupling element (20.1 - 20.4; 9.1, 9.2) has a fork head (201) for coupling to the connection element (32a, 32b, 32c).

11. Engine having at least one adjusting device (3) according to one of the preceding Claims 1 to 10.

## Revendications

1. Dispositif de réglage (3) destiné au réglage de plusieurs aubes directrices (111) d'un groupe motopropulseur (T), dans lequel
- le dispositif de réglage (3) comporte au moins un élément de réglage (30a, 30b, 30c) accouplé aux aubes directrices (111) et monté de manière réglable, un élément de liaison (32a, 32b, 32c) accouplé à l'élément de réglage (30a, 30b, 30c) ainsi qu'un vilebrequin (2) pour la commande d'un mouvement de réglage de l'élément de réglage (30) et
- le vilebrequin (2) comprend au moins un élément d'accouplement (20.1 - 20.4 ; 92.1, 92.2) accouplé à l'élément de liaison (32a, 32b, 32c), élément d'accouplement sur lequel l'élément de liaison (32a, 32b, 32c) est articulé pour transformer un mouvement rotatif du vilebrequin (2) autour d'un axe longitudinal (LA) du vilebrequin (2) en un mouvement de réglage de l'élément de réglage (30a, 30b, 30c) pour le réglage des aubes directrices (111),
dans lequel le vilebrequin (2) est conçu de manière modulaire avec au moins deux modules d'arbre (6.1 - 6.4, 7A, 7B ; 9.1, 9.2) qui sont disposés les uns derrière les autres le long de l'axe longitudinal (LA) du vilebrequin (2) et peuvent être fixés dans différentes positions angulaires les uns par rapport aux autres autour de l'axe longitudinal (LA) par le biais d'au moins une denture (608A, 608B, 78, 88 ; 98A, 98B), et l'élément d'accouplement (20.1 - 20.4 ; 92.1, 92.2) est prévu sur l'un desdits au moins deux modules d'arbre (6.1 - 6.4, 7A, 7B ; 9.1, 9.2) du vilebrequin (2),
**caractérisé en ce que**
- au moins deux modules d'arbre (6.1 - 6.4) sont fixés les uns par rapport aux autres dans une position angulaire autour de l'axe longitudinal (LA) du vilebrequin (2) par le biais d'une pièce intermédiaire (8.1 - 8.5) réalisée sous forme de couronne dentée (8.1 - 8.5), laquelle pièce intermédiaire s'engrène dans une première denture (608A, 608B 78) de l'un des modules d'arbre (6.1 - 6.4, 7A, 7B) et dans une deuxième denture (608B, 78, 608A) de l'autre module d'arbre (6.1 - 6.4, 7A, 7B),
- et/ou au moins deux modules d'arbre (9.1, 9.2) sont fixés les uns par rapport aux autres dans une position angulaire autour de l'axe longitudinal (LA) du vilebrequin (2) par le biais d'une denture Hirth (98A, 98B) .

2. Dispositif de réglage selon la revendication 1, **caractérisé en ce que** le dispositif de réglage (3) comporte au moins un autre élément de réglage (30b, 30c, 30a) et au moins un autre élément de liaison (32b, 32c, 32a) accouplé à l'autre élément de réglage (30b, 30c, 30a), et un autre élément d'accouplement (20.1 - 20.4 ; 9.2, 9.1), sur lequel l'autre élément de liaison (32b, 32c, 32a) est articulé, est prévu sur un autre module d'arbre (6.1 - 6.4 ; 9.2, 9.1) du vilebrequin (2).

3. Dispositif de réglage selon la revendication 1 ou 2, **caractérisé en ce que** la pièce intermédiaire (8.1 - 8.5) comprend une denture extérieure (88) et s'engrène respectivement dans une denture intérieure (608A, 608B 78) des deux modules d'arbre (6.1 - 6.4, 7A, 7B).

4. Dispositif de réglage selon l'une des revendications précédentes, **caractérisé en ce que** l'élément d'accouplement (20.1 - 20.4) est disposé sur un module d'arbre (6.1 - 6.4) de manière réglable radialement entre au moins deux positions de réglage par rapport à l'axe longitudinal (LA) et peut être fixé dans chacune des positions de réglage.

5. Dispositif de réglage selon la revendication 4, **caractérisé en ce que** l'élément d'accouplement (20.1 - 20.4) peut être fixé dans chacune des positions de réglage par le biais d'au moins une denture (601, 2001 ; 602, 2002).

6. Dispositif de réglage selon la revendication 5, **caractérisé en ce que** l'élément d'accouplement (20.1 - 20.4) comprend un corps de fixation (200) doté d'au moins une surface de denture dentée (2001, 2002) pour la fixation dans l'une des positions de réglage possibles.

7. Dispositif de réglage selon la revendication 6, **caractérisé en ce que** deux surfaces de denture dentées (2001, 2003) sont prévues sur le corps de fixation (200) de l'élément d'accouplement (20.1 - 20.4), à savoir sur des côtés frontaux opposés l'un à l'autre du corps de fixation (200).

8. Dispositif de réglage selon la revendication 6 ou 7, **caractérisé en ce que** le corps de fixation (200) est reçu au moins partiellement dans un évidement (600) sur au moins une paroi intérieure duquel est prévue une surface de denture dentée (601, 602) qui coopère avec une surface de denture (2001, 2002) du corps de fixation (200) .

9. Dispositif de réglage selon l'une des revendications 1 à 4 et l'une des revendications 5 à 8, **caractérisé en ce que** lesdits au moins deux modules d'arbre (6.1 - 6.4, 7A, 7B) sont précontraints axialement les uns contre les autres au moyen d'une tige de traction (5) s'étendant le long de l'axe longitudinal (LA) et le corps de fixation (200) comprend une ouverture traversante (2001H, 2002H) s'étendant radialement, à travers laquelle la tige de traction (5) s'étend et par le biais de laquelle le corps de fixation (200) peut être réglé radialement par rapport à la tige de traction (5) lorsqu'une précontrainte axiale des modules d'arbre (6.1 - 6.4, 7A, 7B) est réduite ou supprimée.

10. Dispositif de réglage selon l'une des revendications précédentes, **caractérisé en ce que** l'élément d'accouplement (20.1 - 20.4 ; 9.1, 9.2) comprend une chape (201) pour l'accouplement à l'élément de liaison (32a, 32b, 32c).

11. Groupe motopropulseur comprenant au moins un dispositif de réglage (3) selon l'une des revendications précédentes 1 à 10.
